# EUROPEAN PATENT APPLICATION

(11) **EP 4 701 020 A1**
(43) Date of publication of application: **25.02.2026**
(21) Application number: 24875778.3
(22) Date of filing: 28.11.2024
(51) Int. Cl.: H02J 3/00

(54) **METHOD AND APPARATUS FOR CONTROLLING INTEGRATED ENERGY STORAGE AND CHARGING STATION, AND DEVICE, MEDIUM AND PRODUCT**

(30) Priority: 09.07.2024 CN 202410912684
(71) Applicant: Contemporary Amperex Technology Co., Limited, Fujian 352100 (CN); Contemporary Amperex Future Energy Technology (Shenzhen) Limited, Shenzhen, Guangdong 518100 (CN)
(72) Inventor: WU, Kai, Ningde, Fujian 352100 (CN); LIU, Yi, Ningde, Fujian 352100 (CN); CHENG, Yong, Ningde, Fujian 352100 (CN); WANG, Pengmin, Ningde, Fujian 352100 (CN); ZHENG, Zhimin, Ningde, Fujian 352100 (CN); ZHANG, Zhen, Ningde, Fujian 352100 (CN); CHEN, Zhuo, Ningde, Fujian 352100 (CN); LI, Miao, Ningde, Fujian 352100 (CN); MA, Meng, Ningde, Fujian 352100 (CN)
(74) Representative: Ran, Handong
(86) International application number: PCT/CN2024/135411
(87) International publication number: WO 2026/011667

(57) **Abstract**

A control method, apparatus, device, medium, and product for an integrated storage-charging station are disclosed in the present disclosure, which relate to the field of charging and discharging technologies. The method includes: sending predicted regulation data for a control period to an integrated storage-charging station, the predicted regulation data being generated based on a load prediction model corresponding to the integrated storage-charging station; receiving reported regulation data sent by the integrated storage-charging station, the reported regulation data being generated based on the predicted regulation data; generating a control instruction corresponding to the integrated storage-charging station based on winning regulation data, the control instruction carrying final regulation data corresponding to the integrated storage-charging station, and the final regulation data being obtained after splitting the winning regulation data based on the regulation data reported by the integrated storage-charging station; and issuing a corresponding control instruction to the integrated storage-charging station, for instructing the integrated storage-charging station to regulate its own charging and discharging power based on the final regulation data.

## Description

### CROSS-REFERENCE TO RELATED APPLICATIONS

The present disclosure is filed based on and claims priority to Chinese Patent Application No. 202410912684.6, entitled "CONTROL METHOD, APPARATUS, DEVICE, MEDIUM, AND PRODUCT FOR INTEGRATED STORAGE-CHARGING STATION" and filed on July 9, 2024, which is incorporated herein by reference in its entirety.

### TECHNICAL FIELD

The present disclosure relates to the field of charging and discharging technologies, and in particular, to a control method, apparatus, device, medium, and product for an integrated storage-charging station.

### BACKGROUND

With the widespread access to renewable energy and the development of the electricity market, the power grid is facing increasingly more regulation challenges. Traditional grid regulation methods often rely on centralized power generation resources and limited dispatching methods, and are unable to cope with rapidly changing power supply and demand relationships and diverse regulation needs. In order to improve the regulation capability and stability of the power grid, a Virtual Power Plant (VPP) has emerged as an innovative solution. However, the related art lacks a control method for a virtual power plant to control an integrated storage-charging station, resulting in an insufficient support capability of the virtual power plant for a power distribution network.

### SUMMARY OF THE INVENTION

In view of this, embodiments of the present disclosure provide at least a control method and apparatus, device, medium, and product for an integrated storage-charging station.

Technical solutions in the embodiments of the present disclosure are implemented as follows:
In one aspect, the embodiments of the present disclosure provide a control method for an integrated storage-charging station, applied to a virtual power plant that is communicatively connected to at least one integrated storage-charging station. The method includes: sending predicted regulation data for a control period to the integrated storage-charging station, the predicted regulation data being generated based on a load prediction model corresponding to the integrated storage-charging station; receiving reported regulation data sent by the integrated storage-charging station, the reported regulation data being generated based on the predicted regulation data; generating a control instruction corresponding to the integrated storage-charging station based on winning regulation data, the control instruction carrying final regulation data corresponding to the integrated storage-charging station, the winning regulation data being obtained after reporting to a power dispatching platform based on the received reported regulation data, and the final regulation data being obtained after splitting the winning regulation data based on the regulation data reported by the integrated storage-charging station; and issuing a corresponding control instruction to the integrated storage-charging station, the control instruction being used for instructing the integrated storage-charging station to regulate its own charging and discharging power based on the final regulation data.

**In** some embodiments, the regulation data includes regulatable capability data of the integrated storage-charging station during the control period, and the regulatable capability data represents a charging power adjustment capability and/or discharging power adjustment capability of the integrated storage-charging station during the control period; and the method further includes: generating overall regulation capability data based on the regulatable capability data during the control period reported by various integrated storage-charging stations; the overall regulation capability data being used for representing the charging power adjustment capability and/or discharging power adjustment capability of the virtual power plant during the control period; and reporting the overall regulation capability data to the power dispatching platform.

In the above embodiment, by aggregating charging and discharging power adjustment thresholds of the various integrated storage-charging stations, the amount of calculation required by a power distribution network in response to a reporting request can be reduced, thereby improving the response efficiency.

In some embodiments, the regulatable capability data includes a charging power adjustment threshold and/or a discharging power adjustment threshold; and the generating overall regulation capability data based on the regulatable capability data during the control period of various integrated storage-charging stations includes at least one of the following: generating an overall charging power adjustment threshold corresponding to the virtual power plant based on the charging power adjustment thresholds during the control period reported by the various integrated storage-charging stations; generating an overall discharging power adjustment threshold corresponding to the virtual power plant based on the discharging power adjustment thresholds during the control period reported by the various integrated storage-charging stations; where the overall regulation capability data includes the overall charging power adjustment threshold and/or the overall discharging power adjustment threshold.

In the above embodiment, by respectively calculating the overall discharging power adjustment threshold and the overall charging power adjustment threshold, a discharging capability adjustment space that represents the virtual power plant as a whole during the period may be obtained, thereby providing a data basis for the subsequent reporting process. At the same time, since charging and discharging power adjustment thresholds of the various integrated storage-charging stations are aggregated, the amount of calculation required by a power distribution network in response to a reporting request can be reduced, thereby improving the response efficiency.

In some embodiments, the method further includes: receiving the winning regulation data sent by the power dispatching platform; the winning regulation data including a target charging power adjustment value and/or a target discharging power adjustment value; the target charging power adjustment value being less than or equal to the overall charging power adjustment threshold, and the target discharging power adjustment value being less than or equal to the overall discharging power adjustment threshold.

In the above embodiment, the situation where a regulation instruction issued by the power dispatching platform exceeds the overall charging and discharging power adjustment threshold of the virtual power plant, causing device overload or over-discharge of the integrated storage-charging station in the virtual power plant to damage the device or shortening its service life may be reduced.

In some embodiments, the generating a control instruction corresponding to the integrated storage-charging station based on winning regulation data includes: determining the final regulation data corresponding to the various integrated storage-charging stations during the control period based on the winning regulation data and the regulatable capability data during the control period reported by the various integrated storage-charging stations; and generating the control instructions corresponding to the various integrated storage-charging stations based on the final regulation data corresponding to the various integrated storage-charging stations during the control period.

In the above embodiment, by considering the regulatable capability data of the various stations, the efficiency and rationality of allocating the winning regulation data to the various stations are improved, so that each station is capable of providing the best charging and discharging regulation service within its capability.

In some embodiments, the determining the final regulation data corresponding to the various integrated storage-charging stations during the control period based on the winning regulation data and the regulatable capability data during the control period reported by the various integrated storage-charging stations includes: determining, based on a regulation type of the winning regulation data, a target integrated storage-charging station having a capability of the regulation type in the at least one integrated storage-charging station; and splitting the winning regulation data based on power adjustment thresholds of the regulation type reported by the various target integrated storage-charging stations, to obtain the final regulation data corresponding to the various target integrated storage-charging stations during the control period.

In the above embodiment, by screening the target integrated storage-charging stations that have the regulation capability corresponding to the regulation type, and allocating the winning regulation data according to the power adjustment threshold of the target integrated storage-charging stations, the efficiency and rationality of allocating the winning regulation data to various stations are further improved.

In some embodiments, the regulation data includes operating power of the integrated storage-charging station during the control period; and the method further includes: receiving, before generating predicted regulation data of the integrated storage-charging station during the control period based on the load prediction model corresponding to the integrated storage-charging station, an invitation plan corresponding to the control period issued by the power dispatching platform; sending, after receiving the reported regulation data sent by the integrated storage-charging station, a reporting request for the invitation plan to the power dispatching platform; the reporting request carrying operating power during the control period reported by various integrated storage-charging stations; and receiving the winning regulation data sent by the power dispatching platform; the winning regulation data including reporting results corresponding to the operating power reported by the various integrated storage-charging stations.

In the above embodiment, by sending the reporting request to the power dispatching platform, the virtual power plant can respond to the invitation plan of the power dispatching platform in a timely and accurate manner, thereby ensuring the timeliness and accuracy of power regulation. At the same time, the power dispatching platform clarifies final regulation tasks of the various integrated storage-charging station by sending the winning regulation data, thereby improving the rationality and feasibility of power regulation.

In some embodiments, the generating a control instruction corresponding to the integrated storage-charging station based on winning regulation data includes: determining, when the reporting result represents that the operating power reported by the integrated storage-charging station is successfully reported, the operating power reported by the integrated storage-charging station as the final regulation data corresponding to the integrated storage-charging station; and generating the corresponding control instruction based on the final regulation data corresponding to the integrated storage-charging station.

In the above embodiment, the power dispatching platform can flexibly manage and dispatch the operating power of the integrated storage-charging station to ensure the supply and demand balance and stable operation of the entire power system. For a station that has successfully reported, its operating power is confirmed and a control instruction can be generated in a timely manner to ensure that the station can perform power regulation as planned. For a station that needs adjustment, the platform can make adjustment based on its actual condition and generate a new control instruction to ensure that the station can maximize its economic benefit while meeting system requirements. For a station whose report is rejected, the platform may not generate a control instruction, thereby avoiding unnecessary waste of resources and misoperation.

In some embodiments, the method further includes: receiving real-time operating data sent by the integrated storage-charging station during the control period; generating a deviation warning message based on the real-time operating data and the final regulation data corresponding to the integrated storage-charging station; and sending the deviation warning message to the integrated storage-charging station.

In the above embodiments, the virtual power plant can realize real-time monitoring and precise control of the integrated storage-charging station. When there is a large deviation between the operating data of the integrated storage-charging station and the final regulation data, the virtual power plant can generate a deviation warning message in time to notify the integrated storage-charging station to make an adjustment, thereby ensuring the stable operation of the power system and the balance of supply and demand.

In another aspect, the embodiments of the present disclosure provide a control apparatus for an integrated storage-charging station, applied to a virtual power plant that is communicatively connected to at least one integrated storage-charging station. The control apparatus includes: a sending module configured to send predicted regulation data for a control period to the integrated storage-charging station, the predicted regulation data being generated based on a load prediction model corresponding to the integrated storage-charging station; a receiving module configured to receive reported regulation data sent by the integrated storage-charging station, the reported regulation data being generated based on the predicted regulation data; a generation module configured to generate a control instruction corresponding to the integrated storage-charging station based on winning regulation data, the control instruction carrying final regulation data corresponding to the integrated storage-charging station, and the winning regulation data being obtained after reporting to a power dispatching platform based on the received reported regulation data; and a control module configured to issue a corresponding control instruction to the integrated storage-charging station, the control instruction being used for instructing the integrated storage-charging station to regulate its own charging and discharging power based on the final regulation data.

In still another aspect, the embodiments of the present disclosure provide a computer device, including a memory configured to store executable instructions; and a processor configured to implement some or all of the steps in the above method when executing the executable instructions stored in the memory.

In yet another aspect, the embodiments of the present disclosure provide a computer-readable storage medium storing a computer program. The computer program, when executed by a processor, implements some or all of the steps in the above method.

In yet another aspect, the embodiments of the present disclosure provide a computer program product storing a computer program or instructions. The computer program or instructions, when executed by a processor, implement some or all of the steps in the above method.

In the embodiments of the present disclosure, by the load prediction model, the virtual power plant is capable of accurately predicting regulation demands (such as charging and discharging power, voltage, and current) of an integrated storage-charging station in a specific period, thereby providing a strong data support for the subsequent power grid dispatching. At the same time, based on the predicted data and the reported regulation data of the actual situation of the station, through the review and confirmation of the power dispatching platform, the winning regulation data is capable of ensuring the stable operation of the power grid, thereby enabling the virtual power plant to more reasonably allocate and manage power resources, and ensure the stability and economy of power supply. Moreover, the above virtual power plant and the integrated storage-charging station adopt a standardized communication protocol to realize an interaction process between the virtual power plant and the integrated storage-charging station, thereby realizing the support function for the power distribution network and enhancing the regulation capability and stability of the power grid.

It should be understood that the above general description and the detailed descriptions that follow are exemplary and explanatory only and are not intended to limit the technical solutions of the present disclosure.

### DESCRIPTION OF DRAWINGSINGS

The accompanying drawings herein are incorporated into the description and constitute part of the description, and these accompanying drawings illustrate the embodiments conforming to the present disclosure, and are intended to explain the technical solutions of the present disclosure together with the description.
FIG. 1 is a schematic system diagram of a distributed power resource dispatch system according to an embodiment of the present disclosure;
FIG. 2 is a first schematic flowchart of implementing a control method for an integrated storage-charging station according to an embodiment of the present application;
FIG. 3 is a second schematic flowchart of implementing a control method for an integrated storage-charging station according to an embodiment of the present application;
FIG. 4 is a third schematic flowchart of implementing a control method for an integrated storage-charging station according to an embodiment of the present application;
FIG. 5 is a fourth schematic flowchart of implementing a control method for an integrated storage-charging station according to an embodiment of the present application;
FIG. 6 is a schematic diagram of a dispatching method in a day-ahead adjustment scenario according to an embodiment of the present disclosure;
FIG. 7 is a schematic diagram of a dispatching method in a current-day adjustment scenario according to an embodiment of the present disclosure;
FIG. 8 is a schematic structural diagram of formation of a control apparatus for an integrated storage-charging station according to an embodiment of the present application; and
FIG. 9 is a schematic diagram of a hardware entity of a computer device according to an embodiment of the present disclosure.

### DETAILED DESCRIPTION

In order to make the objects, technical solutions and advantages of the present disclosure clearer, the technical solutions of the present disclosure are further elaborated in detail below in combination with the accompanying drawings and embodiments, the described embodiments should not be regarded as limitations of the present disclosure, and all other embodiments obtained by persons of ordinary skills in the art without making creative efforts fall within the protection scope of the present disclosure.

In the following description, "some embodiments" are involved, which describe a subgroup of all possible embodiments, but it is to be understood that "some embodiments" may be the same or different subsets of all possible embodiments and may be combined with each other without conflict. The terms "first/second/third" are involved only to differentiate between similar objects and do not represent a particular ordering of objects, and it is to be understood that "first/second/third" may be interchanged in a particular order or sequence where permitted to enable the embodiments of the present disclosure described herein to be implemented in a particular order or sequence.

Unless otherwise defined, all technical and scientific terms used herein have the same meanings as those commonly understood by those skilled in the art to which the present disclosure belongs. The terms used herein are merely for the purpose of describing the present disclosure, but are not intended to limit the present disclosure.

An embodiment of the present disclosure provides a control method for an integrated storage-charging station, the method is applied to a virtual power plant, and the virtual power plant is communicatively connected to at least one integrated storage-charging station. The above virtual power plant and at least one integrated storage-charging station are all located in a dispatching system of distributed power resources. The dispatching system of distributed power resources will be explained first below. The dispatching system of distributed power resources may include: a power trading system, a power dispatching system, a virtual power plant, and a plurality of distributed power devices.

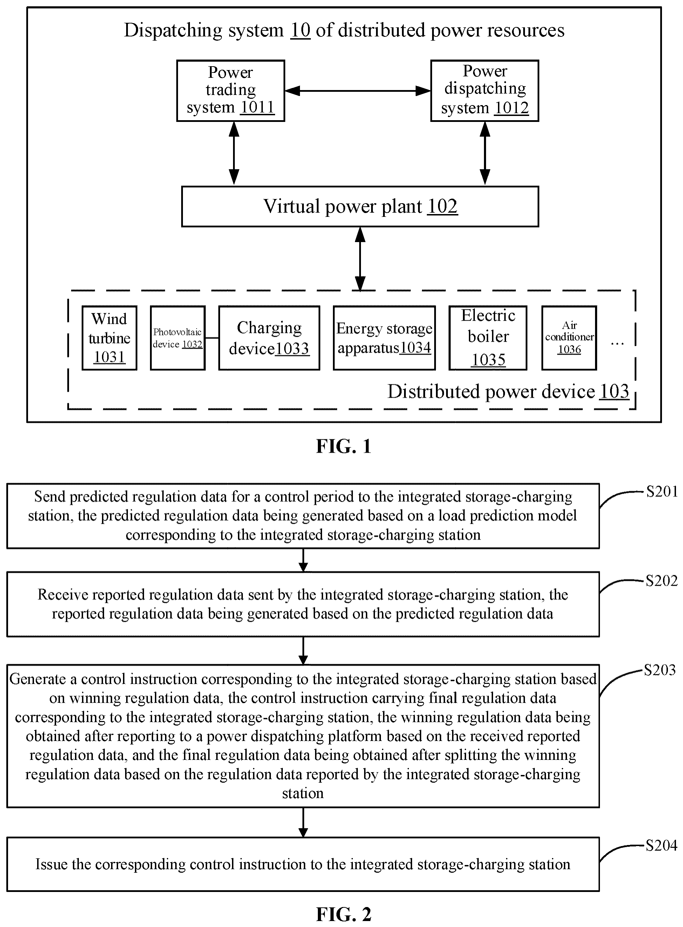

Referring to content shown in FIG. 1, the dispatching system 10 of distributed power resources may include: a power trading system 1011, a power dispatching system 1012, a virtual power plant 102, and a plurality of distributed power devices 103.

The distributed power device 103 may include: a wind turbine 1031, a photovoltaic device 1032, an integrated storage-charging machine 1033, at least one integrated storage-charging station 1034, an electric boiler 1035, and an air conditioner 1036.

The power dispatching system 1012 and the power trading system 1011 are connected upstream of the virtual power plant 102, and a plurality of distributed power devices 103 are connected downstream of the virtual power plant 102. The power trading system 1011 is used for publishing announcement information (such as a plan invitation), and the power dispatching system 1012 is used for performing power dispatching, and the like.

In some embodiments, the distributed power device 103 may include power a generation device, a power consumption device, and a power generation and consumption device (that is, an integrated storage-charging station). The wind turbine 1031 and the photovoltaic device 1032 are power generation devices, the integrated storage-charging machine 1033 and the integrated storage-charging station 1034 are power generation and consumption devices, and the electric boiler 1035 and the air conditioner 1036 are power consumption devices.

FIG. 2 is a first schematic flowchart of implementing a control method for an integrated storage-charging station according to an embodiment of the present application, the method is applied to a virtual power plant, and the virtual power plant is communicatively connected to at least one integrated storage-charging station. As shown in FIG. 2, the method includes the following step S201 to step S204:
Step S201: Send predicted regulation data for a control period to the integrated storage-charging station, the predicted regulation data being generated based on a load prediction model corresponding to the integrated storage-charging station.

The load prediction model corresponding to the integrated storage-charging station may be generated based on the historical operating data corresponding to the integrated storage-charging station.

In some embodiments, the integrated storage station includes at least one integrated storage machine, and the above historical operating data includes but is not limited to the charging and discharging power, charging and discharging voltage, and charging and discharging current of each integrated storage-charging machine in a historical time period. In the embodiment of the present disclosure, the virtual power plant may generate a corresponding load prediction model for the integrated storage-charging station based on the charging and discharging power, charging and discharging voltage, and charging and discharging current of each integrated storage-charging machine in the historical time period. It is understandable that the load prediction model corresponding to the integrated storage-charging station may be configured to directly predict the regulation data of the integrated storage-charging station. The load prediction model corresponding to the integrated storage-charging station may also include a sub-load prediction model corresponding to each integrated storage-charging machine, where each sub-load prediction model is configured to predict regulation data of a corresponding integrated storage-charging machine, and the regulation data of the integrated storage-charging station may be obtained after aggregation. This is not limited in the present disclosure.

In some embodiments, the above regulation data may include at least one of the following: charging and discharging power, charging and discharging voltage, charging and discharging current, charging power regulation capability, and discharging power regulation capability. The charging power regulation capability represents the magnitude of charging power that can be regulated by the integrated storage-charging station during an input period. The discharging power regulation capability represents the magnitude of discharging power that can be regulated by the integrated storage-charging station during the input period.

In the above embodiment, the control period is a period during which support needs to be provided to a power grid dispatching platform. Generally speaking, the control period is a time period in the future, and the length of the time period may be 1 day or several hours. Of course, it may also be a more fine-grained time period, which is not limited in the present disclosure.

In the embodiments of the present disclosure, the control period may be input into the load prediction model corresponding to the integrated storage-charging station to obtain output predicted regulation data of the integrated storage-charging station during the control period.

In some embodiments, a training solution of the load prediction model may adopt a training solution in the related art, which mainly predicts, by using historical operating data, the charging and discharging power, charging and discharging voltage, charging and discharging current, charging power regulation capability, and discharging power regulation capability of the integrated storage-charging station in a specific period in the future. The above training solution may include: (1) Collect historical charging and discharging data of the integrated storage-charging station, including power, voltage, current, and the like. (2) Extract features from the historical data, such as timestamp, time period (peak, valley, or flat), historical data for the same period, weather condition, temperature, and humidity. (3) Clean the historical data of extracted features to deal with missing values and outliers, and standardize or normalize the historical data to obtain final sample data. (4) Train an initial load prediction model by using the final sample data to obtain a trained load prediction model, where the load prediction model may be, but is not limited to, a long short-term memory network (LSTM), a convolutional neural network (CNN), and the like. It is understandable that the above load prediction model may regularly update model parameters by using the latest data to improve the prediction accuracy.

In some embodiments, when the virtual power plant sends predicted regulation data to the integrated storage-charging station, it may also send a reply deadline. Before the reply deadline, if the reported regulation data sent by the integrated storage-charging station is not received, it indicates that the integrated storage-charging station has given up the reporting.

It is understandable that in order to support a control solution having more functions, the virtual power plant may also send at least one of the following contents at the same time: system time, load aggregator unique identification, event type, invitation plan ID, invitation time, response execution start time, response execution end time, trading type (including precise response peak clipping and precise response valley filling), market demand curve (including the total demand of the entire network during a response execution period, where a negative value indicates peak clipping and a positive number indicates valley filling), reference load curve of the integrated storage-charging station, and adjusted load curve of the integrated storage-charging station.

Step S202: Receive the reported regulation data sent by the integrated storage-charging station, the reported regulation data being generated based on the predicted regulation data.

In some embodiments, the virtual power plant distributes the predicted regulation data corresponding to each integrated storage-charging station to the corresponding integrated storage-charging station. The operation and maintenance staff of the integrated storage-charging station adjust the above predicted regulation data based on experience judgment, operational needs, and the like to obtain the reported regulation data. Thereafter, the integrated storage-charging station sends the reported regulation data to the virtual power plant. Accordingly, the virtual power plant may receive the reported regulation data sent by various integrated storage-charging stations.

In some embodiments, after the reported regulation data sent by the integrated storage-charging station is received, the method further includes: generating a data sample for the integrated storage-charging machine based on the reported regulation data and the predicted regulation data, and adjusting the load prediction model corresponding to the integrated storage-charging machine based on the data sample. In the next process of predicting the regulation data of the integrated storage-charging station, the adjusted load prediction model may be used to predict the regulation data. The data sample may also include other data in this interaction process, such as the corresponding system time, load aggregator unique identification, event type, invitation plan ID, invitation time, response execution start time, response execution end time, trading type, market demand curve, reference load curve of the integrated storage-charging station, and adjusted load curve of the integrated storage-charging station.

In other embodiments, after the reported regulation data sent by the integrated storage-charging station is received, the method further includes: saving the reported regulation data and the predicted regulation data, and after reaching the control period, acquiring real response data based on real-time operating data of the integrated storage-charging station; and then generating a data sample for the integrated storage-charging machine based on the reported regulation data, the predicted regulation data, and the real response data, and adjusting the load prediction model corresponding to the integrated storage-charging machine based on the data sample. In the next process of predicting the regulation data of the integrated storage-charging station, the adjusted load prediction model may be used to predict the regulation data.

Step S203: Generate a control instruction corresponding to the integrated storage-charging station based on winning regulation data, the control instruction carrying final regulation data corresponding to the integrated storage-charging station, the winning regulation data being obtained after reporting to a power dispatching platform based on the received reported regulation data, and the final regulation data being obtained after splitting the winning regulation data based on the regulation data reported by the integrated storage-charging station.

In some embodiments, after receiving the reported regulation data sent by the integrated storage-charging station, the virtual power plant may report to the power dispatching platform based on the received reported regulation data to obtain the winning regulation data fed back by the power dispatching platform. The winning regulation data is generated by the power dispatching platform based on the reported regulation data sent by the integrated storage-charging station.

In some embodiments, the virtual power plant may directly package the reported regulation data sent by the integrated storage-charging station and send it to the power dispatching platform, or may summarize and analyze the received reported regulation data sent by the integrated storage-charging station to obtain overall reported data corresponding to the integrated storage-charging station, and then send the overall reported data to the power dispatching platform. Correspondingly, the winning regulation data may include final regulation data corresponding to each integrated storage-charging machine, and then directly generate a control instruction carrying the corresponding final regulation data. The winning regulation data may be the regulation data corresponding to the virtual power plant as a whole. After receiving the winning regulation data, the virtual power plant needs to divide the winning regulation data into the final regulation data corresponding to each integrated storage-charging station, and then generate a control instruction carrying the corresponding final regulation data for each integrated storage-charging station.

In some embodiments, after receiving the winning regulation data, the virtual power plant may split the winning regulation data based on the regulation data reported by various integrated storage-charging stations, and then obtain the final regulation data corresponding to each integrated storage-charging station.

Step S204: Issue the corresponding control instruction to the integrated storage-charging station.

The control instruction is used for instructing the integrated storage-charging station to regulate its own charging and discharging power based on the final regulation data.

In the embodiments of the present disclosure, the virtual power plant sends corresponding control instructions to the various integrated storage-charging stations. Accordingly, after receiving the control instruction, the integrated storage-charging machine may adjust its own charging and discharging power during the control period based on the final regulation data it carries, thereby realizing the support function for the power distribution network and enhancing the regulation capability and stability of the power grid.

For example, assume that the virtual power plant manages three integrated storage-charging stations: a station A, a station B, and a station C. The power grid dispatching platform predicts that there will be a shortage of power supply during a peak period (for example, from 4 p.m. to 6 p.m. tomorrow), and therefore, the virtual power plant is requested to reduce the charging power and increase the discharging power to reduce the load on the power grid. At this time, the control instructions generated for the various stations may be: a control instruction for the station A, that is, during the peak period (16:00 to 18:00), setting the charging power to 100 kW and setting the discharging power to 200 kW; a control instruction for the station B: maintaining the charging power at 50 kW and setting the discharging power to 150 kW; and a control instruction for the station C: completely suspending the charging operation and setting the discharging power to 250 kW. Based on a preset communication protocol, the virtual power plant issues the above control instructions to the various integrated storage-charging stations. Afterwards, after receiving the instruction, the station A adjusts its integrated storage-charging machine to operate at a power of 100 kW and ensures that the discharge device is capable of responding to a power grid demand at a power of 200 kW. The station B sets its integrated storage-charging machine to 50 kW and prepares to discharge at a power of 150 kW when needed. After receiving the instruction, the station C suspends all charging operations and prepares to discharge at a power of 250 kW.

In the embodiments of the present disclosure, by the load prediction model, the virtual power plant is capable of accurately predicting regulation demands (such as charging and discharging power, voltage, and current) of an integrated storage-charging station in a specific period, thereby providing a strong data support for the subsequent power grid dispatching. At the same time, based on the predicted data and the reported regulation data of the actual situation of the station, through the review and confirmation of the power dispatching platform, the winning regulation data is capable of ensuring the stable operation of the power grid, thereby enabling the virtual power plant to more reasonably allocate and manage power resources, and ensure the stability and economy of power supply. Moreover, the above virtual power plant and the integrated storage-charging station adopt a standardized communication protocol to realize an interaction process between the virtual power plant and the integrated storage-charging station, thereby realizing the support function for the power distribution network and enhancing the regulation capability and stability of the power grid.

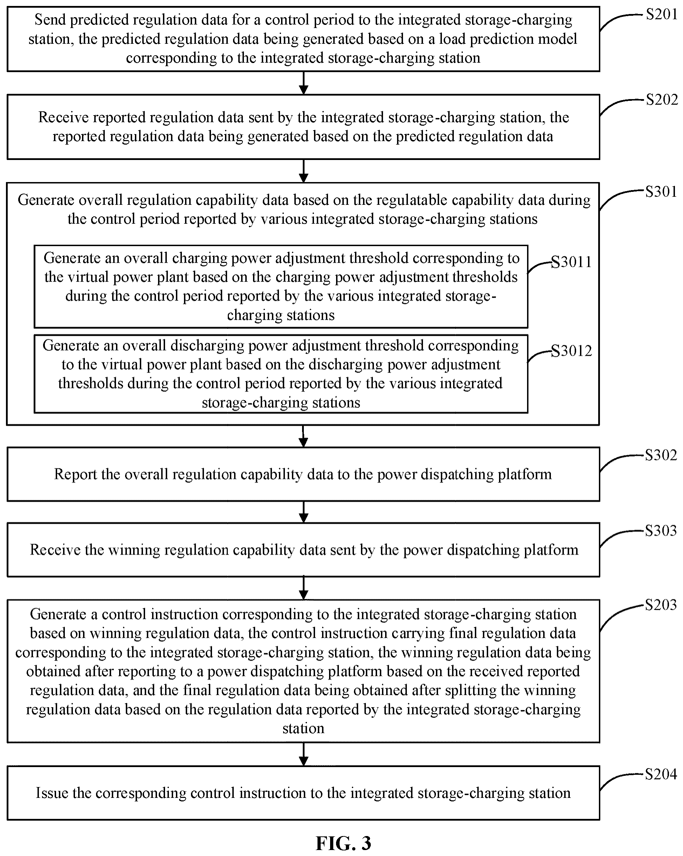

FIG. 3 is a second schematic flowchart of implementing a control method for an integrated storage-charging station according to an embodiment of the present application. The method may be performed by a processor of a control device arranged in a virtual power plant. Based on FIG. 2, the method further includes a step S301 and a step S302, which will be described with reference to steps shown in FIG. 3.

Step S301: Generate overall regulation capability data based on the regulatable capability data during the control period reported by various integrated storage-charging stations.

The overall regulation capability data is used for representing the charging power adjustment capability and/or discharging power adjustment capability of the virtual power plant during the control period.

In the embodiment of the present disclosure, the above step S301 is actually a process in which the virtual power plant generates, based on the regulatable capability data (including a charging power adjustment threshold and a discharging power adjustment threshold) reported by various integrated storage-charging stations managed by it within a specific control period, overall regulation capability data representing the entire virtual power plant within the specific control period. The overall regulation capability data may represent the flexibility of the virtual power plant in adjusting its own charging and discharging power during the control period.

In some embodiments, the overall regulation capability data is used for representing the charging power adjustment capability of the virtual power plant during the control period, and may also represent the discharging power adjustment capability of the virtual power plant during the control period. Of course, it may also represent the charging power adjustment capability and discharging power adjustment capability of the virtual power plant during the control period. It is understandable that this is related to working modes of various integrated storage-charging machines in the virtual power plant.

In the embodiment of the present disclosure, the virtual power plant collects the regulatable capability data of the various integrated storage-charging stations within a specific control period, including the charging power adjustment thresholds and the discharging power adjustment thresholds, and then summarizes and calculates them to obtain an overall charging power adjustment threshold and an overall discharging power adjustment threshold of the entire virtual power plant within the period.

For example, when the working modes of the various integrated storage-charging machines in the virtual power plant are all a charging mode, the virtual power plant manages three integrated storage-charging stations A, B, and C, and the regulatable capability data within a certain control period is as follows: the station A: the charging power adjustment threshold +100 kW to -50 kW (indicating that the charging power may be increased by 100 kW or decreased by 50 kW); the station B: the charging power adjustment threshold +80 kW to -30 kW; and the station C: the charging power adjustment threshold +60 kW to -20 kW. Therefore, the overall charging power adjustment threshold of the virtual power plant within the control period may be obtained by accumulating the adjustment thresholds of the various stations, that is, +240 kW (100 kW+80 kW+60 kW) to -100 kW (50 kW+30 kW+20 kW).

Based on the above step S301, the virtual power plant is capable of accurately and quickly generating its overall regulation capability data within the specific control period, thereby providing important reference information for the power dispatching platform. This helps the power dispatching platform better understand the regulation capability and flexibility of the virtual power plant, thereby formulating a more reasonable dispatching strategy and improving the overall operating efficiency and stability of the power grid. At the same time, this is also conducive to promoting the collaboration between the virtual power plant and power dispatching platform, and jointly promoting the development of the smart power grid.

In some embodiments, the regulatable capability data includes a charging power adjustment threshold and/or a discharging power adjustment threshold. The overall regulation capability data includes an overall charging power adjustment threshold and/or an overall discharging power adjustment threshold. The above generation of the overall regulation capability data based on the regulatable capability data of various integrated storage-charging stations during the control period may be achieved through at least one of step S3011 and step S3012.

Step S3011: Generate an overall charging power adjustment threshold corresponding to the virtual power plant based on the charging power adjustment thresholds during the control period reported by the various integrated storage-charging stations.

In some embodiments, the charging power adjustment threshold is a range of charging power that is capable of being increased or decreased by the integrated storage-charging station within a specific control period. The charging power adjustment threshold represents the charging capability adjustment space of the station within the period.

Step S3012: Generate an overall discharging power adjustment threshold corresponding to the virtual power plant based on the discharging power adjustment thresholds during the control period reported by the various integrated storage-charging stations.

In some embodiments, the discharging power adjustment threshold is a range of discharging power that is capable of being increased or decreased by the integrated storage-charging station within a specific control period. The discharging power adjustment threshold represents the discharging capability adjustment space of the station within the period.

In the above embodiment, the virtual power plant collects the charging or discharging power adjustment thresholds reported by the various integrated storage-charging stations during the specific control period, and then calculates the overall charging or discharging power adjustment threshold of the entire virtual power plant during the period by accumulation or weighting.

In the embodiments of the present disclosure, by respectively calculating the overall discharging power adjustment threshold and the overall charging power adjustment threshold, a discharging capability adjustment space that represents the virtual power plant as a whole during the period may be obtained, thereby providing a data basis for the subsequent reporting process. At the same time, since charging and discharging power adjustment thresholds of the various integrated storage-charging stations are aggregated, the amount of calculation required by a power distribution network in response to a reporting request can be reduced, thereby improving the response efficiency.

Step S302: Report the overall regulation capability data to the power dispatching platform.

After the virtual power plant generates the overall regulation capability data based on the regulatable capability data during the specific control period reported by the various integrated storage-charging stations, the virtual power plant reports the overall regulation capability data to the power dispatching platform. In some embodiments, after receiving the overall regulation capability data sent by the virtual power plant, the power dispatching platform may verify and validate the data. If there are problems with the data or it does not meet requirements, the power dispatching platform may provide a feedback to the virtual power plant and ask it to resend it. After the power dispatching platform confirms the accuracy and validity of the overall regulation capability data, the power dispatching platform may formulate a more reasonable and optimized power grid dispatching plan based on the regulation capability of the virtual power plant and the actual needs of the power grid, and issue the corresponding winning regulation data to the virtual power plant.

In some embodiments, the method further includes step S303.

Step S303: Receive the winning regulation data sent by the power dispatching platform.

The winning regulation data includes a target charging power adjustment value and/or a target discharging power adjustment value, the target charging power adjustment value is less than or equal to the overall charging power adjustment threshold, and the target discharging power adjustment value is less than or equal to the overall discharging power adjustment threshold.

In the embodiment of the present disclosure, the virtual power plant is a participant in the electricity market, and therefore, each station of the plurality of integrated storage-charging stations included therein has its own specific energy storage capability and operating limitations. When issuing regulation instructions, the power dispatching platform must ensure that these instructions are within an operable range of the virtual power plant, that is, the winning regulation data cannot exceed the overall charging and discharging power adjustment threshold of the virtual power plant. In this way, the virtual power plant can safely and effectively adjust the charging and discharging power of the various integrated storage-charging stations according to the received winning regulation data.

On this basis, through the above step S303, the situation where a regulation instruction issued by the power dispatching platform exceeds the overall charging and discharging power adjustment threshold of the virtual power plant, causing device overload or over-discharge of the integrated storage-charging station in the virtual power plant to damage the device or shortening its service life may be reduced.

In some embodiments, the step S203 may be implemented through the following implementation: determining the final regulation data corresponding to the various integrated storage-charging stations during the control period based on the winning regulation data and the regulatable capability data during the control period reported by the various integrated storage-charging stations; and generating the control instructions corresponding to the various integrated storage-charging stations based on the final regulation data corresponding to the various integrated storage-charging stations during the control period.

In the embodiment of the present disclosure, the size of the regulatable capability data during the control period reported by the various integrated storage-charging stations reflects the regulation capacities of the various integrated storage-charging stations during the control period. That is, larger reported regulatable capability data indicates a stronger saving capability, and smaller reported regulatable capability data indicates a weaker saving capability. Therefore, the winning regulation data may be split based on the size of the regulatable capability data during the control period reported by the various integrated storage-charging stations, thereby obtaining the final regulation data corresponding to the various integrated storage-charging stations during the control period. It is understandable that the sum of the final regulation data of the various integrated storage-charging stations is the winning regulation data.

The same as the regulatable capability data during the control period reported by the above integrated storage-charging station, the final regulation data is also the charging power and/or discharging power adjustment value of the integrated storage-charging station for itself during the control period.

The virtual power plant may perform splitting proportionally based on the size of the regulatable capability data of the various integrated storage-charging stations. For example, when the virtual power plant includes a plurality of integrated storage-charging stations (stations A, B, and C), and the winning regulation data is increasing the charging power of the virtual power plant by 500 kW, if the regulatable capability data of the stations A, B, and C during the control period is 200 kW, 300 kW, and 150 kW, respectively (which are charging power adjustment thresholds of the integrated storage-charging machines in this example), it can be seen that the station B has the largest regulatable capability (300 kW), the station A has a moderate regulatable capability (200 kW), and the station C has the smallest regulatable capability (150 kW). Therefore, the final regulation data of the stations A, B, and C during the control period is increasing the charging power by 154 kW, increasing the charging power by 231 kW, and increasing the charging power by 115 kW, respectively.

The virtual power plant may divide, based on the size of the regulatable capability data of various integrated storage-charging stations, the winning regulation data by meeting the station with large regulatable capability data first. For example, it is known that the regulatable capability data of the stations A, B, and C during the control period is 200 kW, 300 kW, and 150 kW, respectively, and the winning regulation data is increasing the charging power by 500 kW. The station B (with the strongest capability) is met first: the station B has a regulatable capability of 300 kW, and therefore, the station B undertakes as many regulation tasks as possible until it reaches the upper limit. Therefore, the station B undertakes a charging power increase of 300 kW. At this time, the remaining regulation task is 500 kW-300 kW=200 kW. Next, the station A (with the moderate capability) is met: the regulatable capability of the station A is 200 kW, which is enough to undertake the remaining regulation task of 200 kW. Therefore, the station A undertakes the remaining charging power increase of 200 kW. The station C does not need to participate in. The final regulation data of the stations A, B, and C during the control period is, respectively, increasing the charging power by 200 kW, increasing the charging power by 300 kW, and not participating in the regulation (or maintaining the original state). In this way, priority is given to the stations with strong capabilities, and it is ensured that the winning regulation task is fully allocated.

It is understandable that, in order to clearly explain the technical solution of the present disclosure, the regulation data in the control period in the above embodiments is illustrated in the present disclosure by using one time point as an example. In a specific implementation scenario, the above regulation data may be regulation data at each time point of a plurality of time points in the control period. For example, the regulation data may be a data curve with 15-minute intervals, and the data curve displays the regulation data of the station in each 15-minute time period.

In the embodiments of the present disclosure, by considering the regulatable capability data of the various stations, the efficiency and rationality of allocating the winning regulation data to the various stations are improved, so that each station is capable of providing the best charging and discharging regulation service within its capability.

In some embodiments, the determining the final regulation data corresponding to the various integrated storage-charging stations during the control period based on the winning regulation data and the regulatable capability data during the control period reported by the various integrated storage-charging stations may be implemented through the following implementation: determining, based on a regulation type of the winning regulation data, a target integrated storage-charging station having a capability of the regulation type in the at least one integrated storage-charging station; and splitting the winning regulation data based on power adjustment thresholds of the regulation type reported by the various target integrated storage-charging stations, to obtain the final regulation data corresponding to the various target integrated storage-charging stations during the control period.

The above winning regulation data may include the regulation type (charging or discharging) and a regulation amount (a value of power increase or decrease). The integrated storage-charging station in the embodiment of the present disclosure is a device station having electric energy storage and charging/discharging functions, which is capable of absorbing and releasing electric energy in the power system to respond to the regulation needs of the power grid. However, the above reported regulatable capability data may, based on operating conditions or device status, have a lack of charging capability or a lack of discharging capability during the control period, and therefore, it is necessary to first determine, based on the regulation type of the winning regulation data, the target integrated storage-charging station having the capability of the regulation type in the at least one integrated storage-charging station.

In the embodiments of the present disclosure, based on the regulation type of the winning regulation data of the virtual power plant, integrated storage-charging stations having capacities corresponding to the regulation type may be first screened out as target integrated storage-charging stations. Then, according to the power adjustment thresholds reported by the various target integrated storage-charging stations, the winning regulation data is reasonably split and allocated to obtain the final regulation data corresponding to the various target integrated storage-charging stations in the control period.

For example, the winning regulation data requires an increase of 500 kW in the discharging power. the four integrated storage-charging stations A, B, C, and D, the stations A and B have discharging capabilities, while the stations C and D do not have discharging capabilities. Discharging power adjustment thresholds reported by the various stations are obtained: the discharging power adjustment threshold of the station A is 200 kW, the discharging power adjustment threshold of the station B is 300 kW, and the stations C and D do not have discharging capabilities in this example, and therefore do not participate in the regulation task. Among the four stations A, B, C, and D, only A and B have discharging capabilities, and therefore, A and B become the target integrated storage-charging stations. In the process of splitting the winning regulation data proportionally, final regulation data of the stations A, B, C, and D during the control period is that the station A increases the discharging power by 200 kW, the station B increases the discharging power by 300 kW, and the stations C and D do not participate in the regulation (because they do not have the discharging capacities).

In the embodiments of the present disclosure, by screening the target integrated storage-charging stations that have the regulation capability corresponding to the regulation type, and allocating the winning regulation data according to the power adjustment threshold of the target integrated storage-charging stations, the efficiency and rationality of allocating the winning regulation data to various stations are further improved.

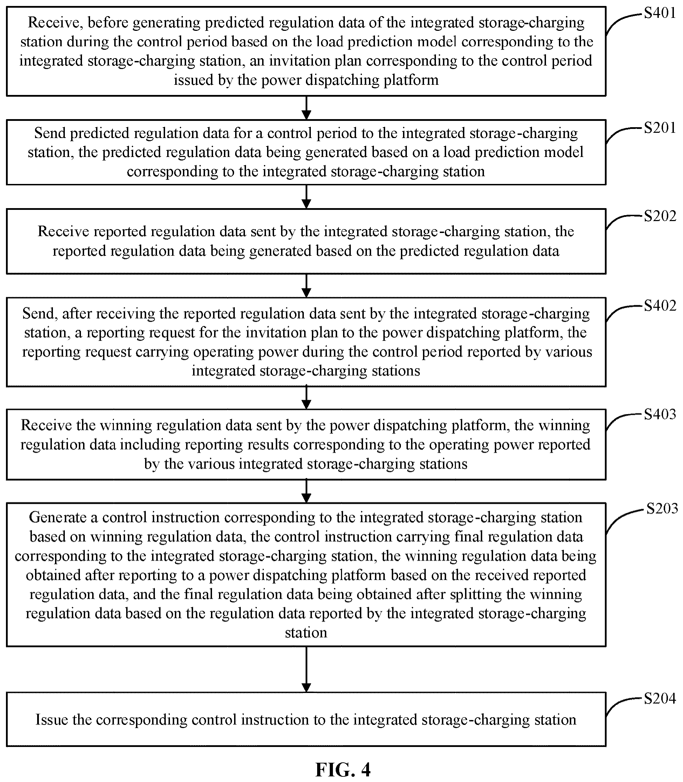

FIG. 4 is a third schematic flowchart of implementing a control method for an integrated storage-charging station according to an embodiment of the present application. Based on FIG. 2, the regulation data includes the operating power of the integrated storage-charging station during the control period, and the method further includes steps S401 to S403, which may be described with reference to the steps shown in FIG. 4.

Step S401: Receive, before generating predicted regulation data of the integrated storage-charging station during the control period based on the load prediction model corresponding to the integrated storage-charging station, an invitation plan corresponding to the control period issued by the power dispatching platform.

The power dispatching platform may formulate an invitation plan based on the real-time supply and demand situation of the power system, and issue it to various power suppliers or power users. As a type of power supplier, the virtual power plant may receive the invitation plan issued by the power dispatching platform. Based on the invitation plan, the virtual power plant may use a load prediction model of each integrated storage-charging station included in it to predict the predicted regulation data of the integrated storage-charging station during the control period.

In the embodiments of the present disclosure, the power dispatching platform issues the invitation plan, which clearly specifies the control period in which the integrated storage-charging station needs to participate in regulation. After receiving the invitation plan, the virtual power plant may use the load prediction models of the various integrated storage-charging stations to predict the operating power within the specified control period, and generate predicted regulation data for the various integrated storage-charging stations based on this. The predicted regulation data may be the operating power of the integrated storage-charging station during the control period. The operating power may include the charging power and/or discharging power.

Step S402: Send, after receiving the reported regulation data sent by the integrated storage-charging station, a reporting request for the invitation plan to the power dispatching platform, the reporting request carrying operating power during the control period reported by the various integrated storage-charging stations.

The reporting request is used for responding to the invitation plan previously issued by the power dispatching platform, and includes planned operating power of various integrated storage-charging stations during the (reported) control period.

For example, the power dispatching platform issues an invitation plan, requiring the virtual power plant to regulate power during a period of 10:00 to 12:00. After receiving the invitation plan, the virtual power plant sends the predicted regulation data to the various integrated storage-charging stations and collects reported regulation data of the various integrated storage-charging stations. When an integrated storage-charging station A and an integrated storage-charging station B are included, the integrated storage-charging station A reports that it can provide discharging power of 500 kW during the period of 10:00 to 12:00; and the integrated storage-charging station B reports that it can provide charging power of 300 kW during the period of 10:00 to 12:00.

Step S403: Receive the winning regulation data sent by the power dispatching platform, the winning regulation data including reporting results corresponding to the operating power reported by the various integrated storage-charging stations.

After receiving reporting requests from all virtual power plants, the power dispatching platform may determine and issue the winning regulation data based on the reporting requests of all virtual power plants, taking into account system requirements, resource status, and other factors. The winning regulation data may be a confirmation, rejection, or adjustment of the operating power reported by the integrated storage-charging station.

Based on the above example, after receiving the reporting request, the power dispatching platform decides, after analysis and calculation, to accept the discharging power reporting of the station A, but adjusts the charging power of the station B to 200 kW. The power dispatching platform sends the above content as the winning regulation data to the virtual power plant.

Based on the above embodiment, by sending the reporting request to the power dispatching platform, the virtual power plant is capable of responding to the invitation plan of the power dispatching platform in a timely and accurate manner, thereby ensuring the timeliness and accuracy of power regulation. At the same time, the power dispatching platform clarifies final regulation tasks of the various integrated storage-charging station by sending the winning regulation data, thereby improving the rationality and feasibility of power regulation.

In some embodiments, the step S203 may be implemented through the following implementation: determining, when the reporting result represents that the operating power reported by the integrated storage-charging station is successfully reported, the operating power reported by the integrated storage-charging station as the final regulation data corresponding to the integrated storage-charging station; and generating the corresponding control instruction based on the final regulation data corresponding to the integrated storage-charging station.

In some embodiments, the step S203 may be implemented through the following implementation: determining, when the reporting result represents that the operating power reported by the integrated storage-charging station needs to be adjusted, the adjusted operating power as the final regulation data corresponding to the integrated storage-charging station; and generating the corresponding control instruction based on the final regulation data corresponding to the integrated storage-charging station.

In some embodiments, the method further includes: generating no control instruction corresponding to the integrated storage-charging station when the reporting result indicates that the operating power reported by the integrated storage-charging station is rejected.

For example, the virtual power plant has three integrated storage-charging stations A, B, and C that participate in the reporting of the power dispatching platform. The station A reports an operating power of 500 kW, and its reporting is successful. The power dispatching platform accepts the reporting and determines that the final regulation data is 500 kW. Subsequently, the virtual power plant generates a control instruction based on the final regulation data, requiring the station A to provide a discharging power of 500 kW within a specified period. The station B reports an operating power of 300 kW, but the reporting result needs to be adjusted. The power dispatching platform recommends adjusting its operating power to 250 kW and determines the final regulation data to be 250 kW. Subsequently, the virtual power plant generates a control instruction based on the final regulation data, requiring the station B to provide a discharging power of 250 kW within the specified period. The station C reports an operating power of 400 kW, but its reporting is rejected and the power dispatching platform does not accept its reporting, so there is no final regulation data. Since the reporting is rejected, the virtual power plant generates no control instruction for the station C.

Based on the above embodiment, the power dispatching platform can flexibly manage and dispatch the operating power of the integrated storage-charging station to ensure the supply and demand balance and stable operation of the entire power system. For a station that has successfully reported, its operating power is confirmed and a control instruction can be generated in a timely manner to ensure that the station can perform power regulation as planned. For a station that needs adjustment, the platform can make adjustment based on its actual condition and generate a new control instruction to ensure that the station can maximize its economic benefit while meeting system requirements. For a station whose report is rejected, the platform may not generate a control instruction, thereby avoiding unnecessary waste of resources and misoperation.

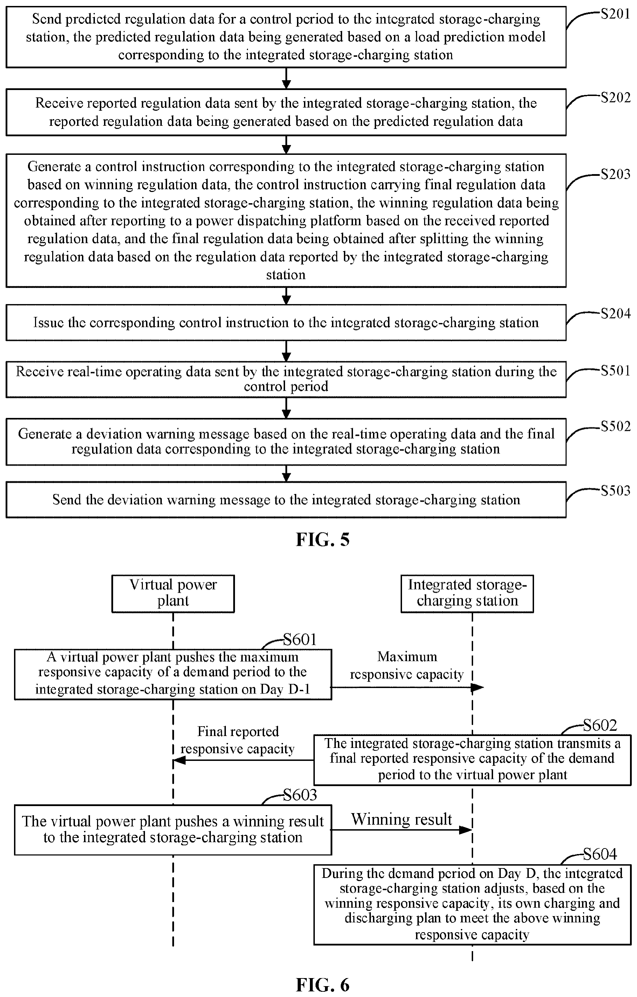

FIG. 5 is a fourth schematic flowchart of implementing a control method for an integrated storage-charging station according to an embodiment of the present application. Based on FIG. 2, the method may further include a step S501 and a step S503, which will be described with reference to steps shown in FIG. 5.

Step S501: Receive real-time operating data sent by the integrated storage-charging station during the control period.

The real-time operating data represents the actual operation status and performance of the integrated storage-charging station during the control period. In some embodiments, the real-time operating data includes but is not limited to operating parameters such as charging and discharging power, battery capacity, voltage, and current.

Step S502: Generate a deviation warning message based on the real-time operating data and the final regulation data corresponding to the integrated storage-charging station.

In some embodiments, when the above final regulation data is the charging power adjustment value and/or discharging power adjustment value of the integrated storage-charging station during the control period, the virtual power plant may acquire the charging power and/or discharging power of the integrated storage-charging station before adjustment, as well as the charging power and/or discharging power after adjustment, and calculate the actual charging power adjustment value and/or actual discharging power adjustment value of the integrated storage-charging station. On the one hand, a deviation between the actual charging power adjustment value and the charging power adjustment value in the final regulation data may be calculated, and when the deviation exceeds a threshold of the charging adjustment, a deviation warning message for charging adjustment is generated. On the other hand, a deviation between the actual discharging power adjustment value and the discharging power adjustment value in the final regulation data may also be calculated, and when the deviation exceeds a threshold of the discharging adjustment, a deviation warning message for discharging adjustment is generated. It is understandable that the above deviation value may be a difference between the actual power adjustment value and the power adjustment value in the final regulation data, or may be a ratio of the difference to the power adjustment value in the final regulation data.

Step S503: Send the deviation warning message to the integrated storage-charging station.

When there is a large deviation between the real-time operating data and the final regulation data, the virtual power plant automatically generates the above deviation warning message and sends the deviation warning message to the integrated storage-charging station. The deviation warning message is capable of promptly reminding the operation and maintenance personnel of the integrated storage-charging station to pay attention to the operating status of the station and take corresponding measures to make adjustments.

For example, the final regulation data of the integrated storage-charging station A is providing a discharging power of 300 kW during the control period. In real-time operation, the real-time operating data received by the virtual power plant shows that the discharging power of the station A is 280 kW. The deviation is small (does not exceed the threshold), the system does not generate a deviation warning message. However, if the real-time operating data shows that the discharging power of the station A is 250 kW, due to the large deviation (exceeding the threshold), the system may immediately generate a deviation warning message and send the deviation warning message to the station A. After receiving the message, the administrator or operator of the station A may promptly understand the operating status of the station and take corresponding measures to make adjustments to ensure that the station is capable of meeting the requirements of the final regulation data.

**In** the embodiments of the present disclosure, the virtual power plant can realize real-time monitoring and precise control of the integrated storage-charging station. When there is a large deviation between the operating data of the integrated storage-charging station and the final regulation data, the virtual power plant can generate a deviation warning message in time to notify the integrated storage-charging station to make an adjustment, thereby ensuring the stable operation of the power system and the balance of supply and demand.

The application of the control method for the integrated storage-charging station provided by the embodiment of the present disclosure in an actual scenario is illustrated below, which mainly involves a control process of the integrated storage-charging station by the virtual power plant.

The embodiments of the present disclosure provide a technical solution for interconnecting a virtual power plant with an integrated storage-charging station, and implement, based on the interconnection between the virtual power plant and the integrated storage-charging station, the dispatching of the integrated storage-charging station by the virtual power plant, so as to provide a support function for the power distribution network, and enhance the regulation capability and stability of the power grid.

In the embodiments of the present disclosure, an information transmission protocol is constructed between the virtual power plant and the integrated storage-charging station to achieve transmission of the following types of data.

### (1) Real-time operating data of the integrated storage-charging station.

The integrated storage-charging station includes at least one integrated storage-charging machine. The integrated storage-charging station may send a data reporting message to the virtual power plant through a data reporting interface provided by the information transmission protocol. The data reporting message is used for uploading the real-time operating data of the integrated storage-charging machine.

The data reporting message carries the system time and the real-time operating data of the integrated storage-charging machine. The real-time operating data includes the identification of the integrated storage-charging machine, data time, power of the integrated storage-charging machine, voltage of the integrated storage-charging machine, and current of the integrated storage-charging machine.

### (2) Historical operating data of the integrated storage-charging station.

The virtual power plant sends a query request to the integrated storage-charging station through a data query interface provided by the information transmission protocol to query the historical operating data of the integrated storage-charging station. The query request includes the system time, the identification of the integrated storage-charging station, the identification of an integrated storage-charging machine that needs to be supplemented (in the form of a set), the start time of the historical data, and the end time of the historical data. The integrated storage-charging station, in response to the query request, sends a data feedback message to the virtual power plant. The data feedback message is used for uploading the historical operating data of the integrated storage-charging machine.

The historical operating data carried by the data feedback message includes the identification of the integrated storage-charging machine, data time, power of the integrated storage-charging machine, voltage of the integrated storage-charging machine, and current of the integrated storage-charging machine.

It is understandable that the virtual power plant may generate a corresponding load prediction model based on the above historical operating data.

### (3) The virtual power plant sends an invitation announcement to the integrated storage-charging station.

The virtual power plant calls an invitation transmission interface provided by the information transmission protocol to issue a demand response invitation.

Response invitation data carried by the response invitation includes system time, load aggregator unique identification, event type, invitation plan ID, invitation time, invitation reply deadline, response execution start time, response execution end time, trading type (including precise response peak clipping RQXF and precise response valley filling RQTG), market demand curve (including the total demand of the entire network during a response execution period, where a negative value indicates peak clipping and a positive number indicates valley filling), reference load curve of the integrated storage-charging station, and adjusted load curve of the integrated storage-charging station.

In some embodiments, the market demand curve includes average power of the market demands in various time intervals. The reference load curve of the above integrated storage-charging station includes the identification of the integrated storage-charging station and the average operating power of the integrated storage-charging station in the various time intervals. The adjustment load curve of the above integrated storage-charging station includes the identification of the integrated storage-charging station and the maximum adjustable power of the integrated storage-charging station in the various time intervals.

It is understandable that the above reference load curve and the adjustment load curve are used for reference by the administrator of the integrated storage-charging station to report a response plan.

### (4) The integrated storage-charging station sends reporting data to the virtual power plant.

The integrated storage-charging station calls a responsive capacity transmission interface provided by the information transmission protocol and sends a reporting request.

The reporting request includes an invitation plan ID and reporting data that need to be responded to.

In some embodiments, the reporting data includes time, reporting capacity, reporting price, and regulatable capacity.

### (5) The virtual power plant sends winning data to the integrated storage-charging station.

The virtual power plant actively calls a winning information transmission interface provided by the information transmission protocol to issue winning information.

The winning information includes system time, plan number, plan name, invitation plan ID, response date (the dates corresponding to the response execution start time and the response execution end time), load aggregator unique identification, event type, price curve, dispatching plan, and overall plan.

In some embodiments, the above price curve includes price curves of the integrated storage-charging station in various time intervals (unit: yuan/MWh). The above dispatching plan includes operating power curves of the integrated storage-charging station in various time intervals. The overall plan includes: identification of the integrated storage-charging station and an overall power curve. The overall power curve includes average power of the integrated storage-charging station in the various time intervals.

### (6) The virtual power plant sends deviation alarm information to the integrated storage-charging station.

The virtual power plant actively calls an alarm interface provided by the information transmission protocol to send deviation alarm information, and a time granularity may be determined later.

The deviation alarm information includes creation time, identification of the integrated storage-charging station, invitation plan ID, deviation rate, alarm level, and response type (day-ahead precise response, real-time precise response, and 5G frequency modulation).

It is understandable that after the above deviation alarm information is sent to the integrated storage-charging station, the management personnel of the integrated storage-charging station may adaptively adjust the power of the integrated storage-charging station based on the deviation rate in the deviation alarm information.

Based on the information transmission protocol between the virtual power plant and the integrated storage-charging station, as well as the transmission of the above various types of data, the control process of the integrated storage-charging station may be realized in various scenarios. The dispatching method of the virtual power plant will be illustrated exemplarily below by using the day-ahead adjustment scenario, the current-day adjustment scenario, and the deviation alarm scenario.

Referring to FIG. 6, a schematic diagram of a dispatching method in a day-ahead adjustment scenario is shown.

Step S601: A virtual power plant pushes the maximum responsive capacity of a demand period to the integrated storage-charging station on Day D-1.

After a power grid initiates an invitation demand on Day D-1, the virtual power plant may evaluate the maximum responsive capacity (the maximum responsive capacity is a full stop) of the integrated storage-charging station during the demand period based on a load prediction result, and push the maximum responsive capacity to the integrated storage-charging station.

Step S602: The integrated storage-charging station transmits a final reported responsive capacity of the demand period to the virtual power plant.

The operation and maintenance personnel of the integrated storage-charging station may adjust the result based on experience judgment, operational needs, and the like, and generate the final reported responsive capacity before the agreed time.

Step S603: The virtual power plant pushes a winning result to the integrated storage-charging station.

The virtual power plant operator summarizes the final reported responsive capacities of the various integrated storage-charging stations and reports it. After winning the bid, the virtual power plant may push the winning result to the integrated storage-charging station, that is, pushes the winning responsive capacity corresponding to the demand period to the integrated storage-charging station.

Step S604: During the demand period on Day D, the integrated storage-charging station may adjust, based on the winning responsive capacity, its own charging and discharging plan to meet the winning responsive capacity.

In some embodiments, the virtual power plant may monitor real-time power, calculate the responsive capacity, and issue deviation warning, thereby ensuring an effective response.

In some embodiments, the virtual power plant sends a detailed settlement bill to the integrated storage-charging station. The market revenue is announced on a monthly basis. After the corresponding result is released, the virtual power plant may verify the revenue and issue a detailed settlement bill to the integrated storage-charging station.

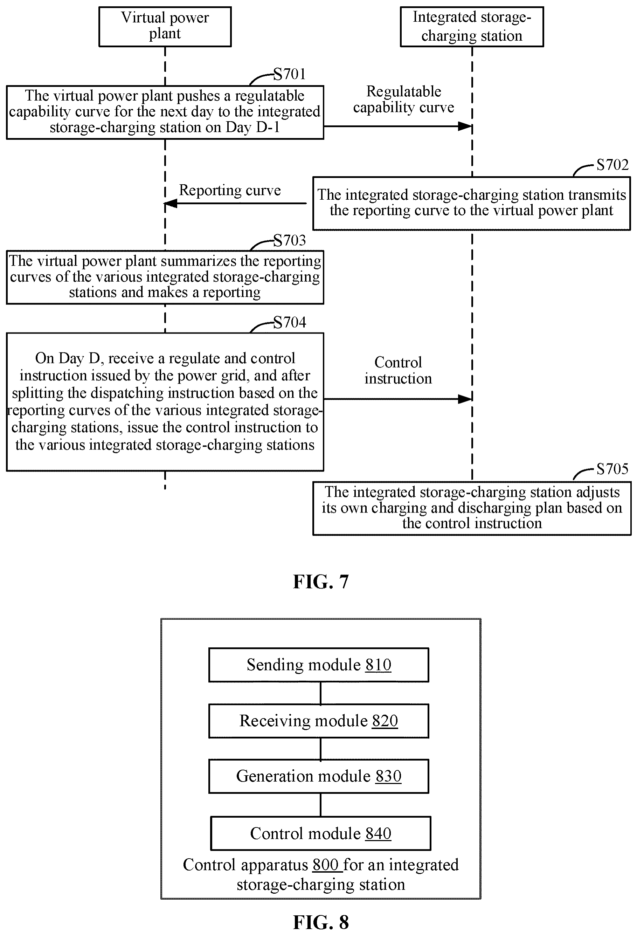

Referring to FIG. 7, a schematic diagram of a dispatching method in a current-day adjustment scenario is shown.

Step S701: The virtual power plant pushes a regulatable capability curve for the next day to the integrated storage-charging station on Day D-1.

The virtual power plant may evaluate the regulatable capability curve of the integrated storage-charging station at 96 points on the next day based on the load prediction result. An evaluation value is the maximum regulatable amount at each 15-minute point (the maximum regulatable amount is a full stop), and the 96-point regulatable capability curve of the next day may be pushed to the integrated storage-charging station.

Step S702: The integrated storage-charging station transmits the reporting curve to the virtual power plant.

The interface personnel of the integrated storage-charging station may adjust the 96-point regulatable capability curve for the next day based on experience judgment, operational needs, and the like, and generate the final reporting curve before the agreed time.

Step S703: The virtual power plant summarizes the reporting curves of the various integrated storage-charging stations and makes a reporting.

Step S704: On Day D, receive a regulate and control instruction issued by the power grid, and after splitting the dispatching instruction based on the reporting curves of the various integrated storage-charging stations, issue the control instruction to the various integrated storage-charging stations.

On Day D, the power grid issues the regulate and control instruction to the virtual power plant (the instruction may be lower than the reported value). The virtual power plant may split the dispatching instruction according to the 96-point regulatable capability reported by the integrated storage-charging station, the current charging power, and the current discharging power, and then issue it to the integrated storage-charging stations (the instruction splitting mode such as equal proportion splitting and priority meeting may be selected) to adjust the charging power/discharging power.

Step S705: The integrated storage-charging station adjusts its own charging and discharging plan based on the control instruction.

In some embodiments, the virtual power plant may monitor real-time power, calculate the responsive capacity, and issue deviation warning, thereby ensuring an effective response.

In some embodiments, the virtual power plant sends a detailed settlement bill to the integrated storage-charging station. The market revenue is announced on a monthly basis. After the corresponding result is released, the virtual power plant may verify the revenue and issue a detailed settlement bill to the integrated storage-charging station.

In some embodiments, the virtual power plant may also use 5G network slicing technology to achieve fast and real-time frequency regulation services, thereby improving the grid regulation capability and stability.

Through the technical solutions provided in the above embodiments, the virtual power plant is capable of more effectively dispatching distributed resources such as integrated storage-charging stations, participating in the demand response and frequency regulation services of the power grid, and enhancing the regulation capability and stability of the power grid. At the same time, through real-time monitoring and deviation alarms, the virtual power plant is capable of ensuring that the charging and discharging plans of the integrated storage-charging stations are consistent with the grid demand, thereby improving the overall energy utilization efficiency and market response speed.

Based on the foregoing embodiments, the embodiments of the present disclosure provide a control apparatus for an integrated storage-charging station. The apparatus includes units included therein and modules included in the units may be implemented by a processor in a computer device. Of course, it may also be implemented by a specific logic circuit. In an implementation process, the processor may be a Central Processing Unit (CPU), a Microprocessor unit (MPU), a Digital Signal Processor (DSP), a Field Programmable Gate Array (FPGA), or the like.

FIG. 8 is a schematic structural diagram of formation of a control apparatus for an integrated storage-charging station according to an embodiment of the present application. As shown in FIG. 8, a control apparatus 800 for an integrated storage-charging station includes: a sending module 810, a receiving module 820, a generation module 830, and a control module 840.

The sending module 810 is configured to send predicted regulation data for a control period to the integrated storage-charging station, the predicted regulation data being generated based on a load prediction model corresponding to the integrated storage-charging station. The receiving module 820 is configured to receive reported regulation data sent by the integrated storage-charging station, the reported regulation data being generated based on the predicted regulation data. The generation module 830 is configured to generate a control instruction corresponding to the integrated storage-charging station based on winning regulation data, the control instruction carrying final regulation data corresponding to the integrated storage-charging station, the winning regulation data being obtained after reporting to a power dispatching platform based on the received reported regulation data, and the final regulation data being obtained after splitting the winning regulation data based on the regulation data reported by the integrated storage-charging station. The control module 840 is configured to issue a corresponding control instruction to the integrated storage-charging station, the control instruction being used for instructing the integrated storage-charging station to regulate its own charging and discharging power based on the final regulation data.

In some embodiments, the regulation data includes regulatable capability data of the integrated storage-charging station during the control period, and the regulatable capability data represents a charging power adjustment capability and/or discharging power adjustment capability of the integrated storage-charging station during the control period; and the sending module 810 is further configured to: generate overall regulation capability data based on the regulatable capability data during the control period reported by various integrated storage-charging stations, the overall regulation capability data being used for representing the charging power adjustment capability and/or discharging power adjustment capability of the virtual power plant during the control period; and report the overall regulation capability data to the power dispatching platform.

In some embodiments, the regulatable capability data includes a charging power adjustment threshold and/or a discharging power adjustment threshold; and the sending module 810 is further configured to: generate an overall charging power adjustment threshold corresponding to the virtual power plant based on the charging power adjustment thresholds during the control period reported by the various integrated storage-charging stations; and/or generate an overall discharging power adjustment threshold corresponding to the virtual power plant based on the discharging power adjustment thresholds during the control period reported by the various integrated storage-charging stations, where the overall regulation capability data includes the overall charging power adjustment threshold and/or the overall discharging power adjustment threshold.

In some embodiments, the receiving module 820 is further configured to: receive the winning regulation data sent by the power dispatching platform, the winning regulation data including a target charging power adjustment value and/or a target discharging power adjustment value, the target charging power adjustment value being less than or equal to the overall charging power adjustment threshold, and the target discharging power adjustment value being less than or equal to the overall discharging power adjustment threshold.

In some embodiments, the generation module 830 is further configured to: determine the final regulation data corresponding to the various integrated storage-charging stations during the control period based on the winning regulation data and the regulatable capability data during the control period reported by the various integrated storage-charging stations; and generate the control instructions corresponding to the various integrated storage-charging stations based on the final regulation data corresponding to the various integrated storage-charging stations during the control period.

In some embodiments, the generation module 830 is further configured to: determine, based on a regulation type of the winning regulation data, a target integrated storage-charging station having a capability of the regulation type in the at least one integrated storage-charging station; and split the winning regulation data based on power adjustment thresholds of the regulation type reported by the various target integrated storage-charging stations, to obtain the final regulation data corresponding to the various target integrated storage-charging stations during the control period.

In some embodiments, the regulation data includes operating power of the integrated storage-charging station during the control period; the receiving module 820 is further configured to receive, before generating predicted regulation data of the integrated storage-charging station during the control period based on the load prediction model corresponding to the integrated storage-charging station, an invitation plan corresponding to the control period issued by the power dispatching platform; and the sending module 810 is further configured to receive, after receiving the reported regulation data sent by the integrated storage-charging station, a reporting request for the invitation plan to the power dispatching platform, the reporting request carrying operating power during the control period reported by the various integrated storage-charging stations; and receive the winning regulation data sent by the power dispatching platform, the winning regulation data including reporting results corresponding to the operating power reported by the various integrated storage-charging stations.

In some embodiments, the generation module 830 is further configured to: determine, when the reporting result represents that the operating power reported by the integrated storage-charging station is successfully reported, the operating power reported by the integrated storage-charging station as the final regulation data corresponding to the integrated storage-charging station; and generate the corresponding control instruction based on the final regulation data corresponding to the integrated storage-charging station.

In some embodiments, the generation module 830 is further configured to: receive real-time operating data sent by the integrated storage-charging station during the control period; generate a deviation warning message based on the real-time operating data and the final regulation data corresponding to the integrated storage-charging station; and send the deviation warning message to the integrated storage-charging station.

It is noted here that the description of the above apparatus embodiments is similar to the description of the above method embodiments and has similar beneficial effects as the method embodiments. In some embodiments, the functions or modules included in the apparatus provided in the embodiments of the present disclosure may be used to perform the method described in the above method embodiments. For technical details not disclosed in the apparatus embodiments of the present disclosure, reference may be made to the description of the method embodiments of the present disclosure for understanding.

It should be noted that, in the embodiments of the present disclosure, the control method for the integrated storage-charging station may be stored in a computer-readable storage medium if it is implemented in the form of a software functional module and is sold or used as a separate product. Based on such understanding, the technical solutions of the embodiments of the present disclosure essentially or a part that contributes to the prior art may be embodied in the form of a software product, and the software product is stored in a storage medium and includes several instructions for causing a computer device (which may be a personal computer, a server, a network device, or the like) to perform all or some of the steps of the methods according to the embodiments of the present disclosure. The storage medium includes: a USB flash disk, a mobile hard disk, a Read Only Memory (ROM), a magnetic disk, an optical disc, or other mediums that can store program codes. In this way, the embodiments of the present disclosure are not limited to any particular hardware, software, or firmware, or any combination of hardware, software, and firmware.

The embodiments of the present disclosure provide a computer device, including a memory configured to store executable instructions; and a processor configured to implement some or all of the steps in the above method when executing the executable instructions stored in the memory.

The embodiments of the present disclosure provide a computer-readable storage medium storing a computer program. The computer program, when executed by a processor, implements some or all of the steps in the above method. The computer-readable storage medium may be transitory or non-transitory.

The embodiments of the present disclosure provide a computer program including a computer-readable code, and when the computer-readable code is run in a computer device, a processor in the computer device performs some or all of the steps for implementing the above method.

The embodiments of the present disclosure provide a computer program product, the computer program product including a non-transitory computer-readable storage medium storing a computer program. The computer program, when read and executed by a computer, implements some or all of the steps in the above method. The computer program product may be implemented in hardware, software, or a combination thereof. In some embodiments, the computer program product is specifically embodied as a computer storage medium. In other embodiments, the computer program product is specifically embodied as a software product, such as a Software Development Kit (SDK) and the like.

It should be pointed out here that: the above description of the various embodiments tends to emphasize the differences between the various embodiments, and the same or similar parts thereof may be referenced to each other. The description of the above embodiments of the device, storage medium, computer program, and computer program product is similar to the description of the above method embodiments, and has similar beneficial effects as the method embodiments. For technical details not disclosed in the embodiments of the device, storage medium, computer program, and computer program product of the present disclosure, reference may be made to the description of the method embodiments of the present disclosure for understanding.

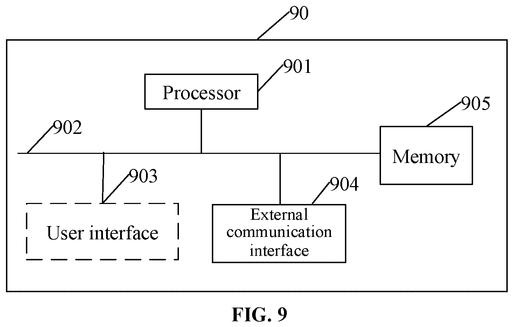

FIG. 9 is a schematic diagram of a hardware entity of a computer device according to an embodiment of the present disclosure. As shown in FIG. 9, the hardware entity of a computer device 90 includes: a processor 901, at least one communication bus 902, a user interface 903, at least one external communication interface 904, and a memory 905. The communication bus 902 is configured to implement connection communications between these components. The user interface 903 may include a display, and the external communication interface 904 may include a standard wired interface and a standard wireless interface.

The memory 905 is configured to store instructions and applications executable by the processor 901, and may also cache data to be processed or processed by the processor 901 and various modules in the electronic device (for example, image data, audio data, voice communication data, and video communication data), which may be implemented through flash memory (FLASH) or Random Access Memory (RAM). It should be pointed out here that the description of the above embodiments of the storage medium, device, apparatus, and program product is similar to the description of the above method embodiments and has similar beneficial effects as the method embodiments. For technical details not disclosed in the embodiments of the storage medium, device, apparatus, and program product of the present disclosure, reference may be made to the description of the method embodiments of the present disclosure for understanding.

It should be understood that references throughout the specification to "one embodiment" or "an embodiment" imply that specific features, structures, or characteristics related to the embodiment are included in at least one embodiment of the present disclosure. Thus, "in one embodiment" or "in an embodiment" that appears throughout the specification may not necessarily refer to the same embodiment. In addition, these specific features, structures, or characteristics may be combined in one or more embodiments in any suitable manner. It should be understood that in the various embodiments of the present disclosure, the magnitudes of the serial numbers of the above steps/processes do not imply the order of execution, and the execution order of the various steps/processes should be determined by their functions and internal logic, which should not constitute any limitations on the implementation process of the embodiments of the present disclosure. The serial numbers of the embodiments of the present disclosure are merely used for description, and do not imply the preference among the embodiments.

It should be further noted that, herein, the term "include", "comprise" or other variations thereof are intended to cover non-exclusive including, so that a process, method, article, or apparatus including a series of elements not only includes the elements, but also includes other elements not clearly listed, or further includes inherent elements of the process, method, article, or apparatus. In a case without any more limitations, an element defined by "including a..." does not exclude that the process, method, article, or apparatus including the element further has other identical elements.

In the several embodiments provided in the present disclosure, it should be understood that, the disclosed device and method may be implemented in other manners. The device embodiment described in the foregoing is merely schematic, for example, the division of units is merely division of logic functions, and in fact, there may be other division manners during implementation, for example, multiple units or components may be combined or may be integrated into another system, or some features may be omitted or not be executed. In addition, the displayed or discussed coupling or direct coupling or communication connection between the components may be implemented through some interfaces, and indirect coupling or communication connection between devices or units, and may be in the form of electrical, mechanical or other forms.

The units mentioned above as separate components may be, or may not be physically separated, and the parts displayed as units may be, or may not be physical units; they may be located in one place or distributed onto a plurality of network units; and some or all of the units can be selected according to actual needs to achieve the purpose of the solution of this embodiment.

In addition, functional units in the embodiments of the present disclosure may be integrated in a processing module, the units may also be each served as a separate unit, or two or more units are integrated into one unit. The integrated units may be implemented in a form of hardware, and may also be implemented in a form of hardware plus software function units.

Persons of ordinary skill in the art may understand: all or a part of steps of the method embodiment may be implemented by a program instructing related hardware, the program may be stored in a computer readable storage medium, and when the program is executed, the steps of the method embodiment are executed; the storage medium includes various media capable of storing program codes, such as a mobile storage device, a Read Only Memory (ROM), a magnetic disk, and an optical disc.

Alternatively, the integrated unit of the present disclosure, if implemented in the form of a software functional module and sold or used as an independent product, may be stored in a computer readable storage medium. Based on such understanding, the technical solutions of the embodiments of the present disclosure essentially or a part that contributes to the prior art may be embodied in the form of a software product, and the computer software product is stored in a storage medium and includes several instructions for causing a computer device (which may be a personal computer, a server, a network device, or the like) to perform all or some of the steps of the methods according to the embodiments of the present disclosure. The storage medium includes various media that can store program codes, such as a mobile storage device, a ROM, a magnetic disk, or an optical disc.

The above descriptions are merely specific implementation manners of the present disclosure, the protection scope of the present disclosure is not limited thereto, and variations or replacements that can easily derived by those skilled in the art without departing from the technical scope disclosed in the present disclosure shall fall within the protection scope of the present disclosure.

## Claims

1. A control method for an integrated storage-charging station, applicable to a virtual power plant communicatively connected to at least one integrated storage-charging station, the method comprising:
sending predicted regulation data for a control period to the integrated storage-charging station, the predicted regulation data being generated based on a load prediction model corresponding to the integrated storage-charging station;
receiving reported regulation data sent by the integrated storage-charging station, the reported regulation data being generated based on the predicted regulation data;
generating a control instruction corresponding to the integrated storage-charging station based on winning regulation data, the control instruction carrying final regulation data corresponding to the integrated storage-charging station, the winning regulation data being obtained after reporting to a power dispatching platform based on the received reported regulation data, and the final regulation data being obtained after splitting the winning regulation data based on the regulation data reported by the integrated storage-charging station; and
issuing a corresponding control instruction to the integrated storage-charging station, the control instruction being used for instructing the integrated storage-charging station to regulate its charging and discharging power based on the final regulation data.

2. The method according to claim 1, wherein the regulation data comprises regulatable capability data of the integrated storage-charging station during the control period, the regulatable capability data representing a charging power adjustment capability and/or discharging power adjustment capability of the integrated storage-charging station during the control period; and the method further comprises:
generating overall regulation capability data based on the regulatable capability data during the control period reported by various integrated storage-charging stations;
the overall regulation capability data being used for representing charging power adjustment capability and/or discharging power adjustment capability of the virtual power plant during the control period; and
reporting the overall regulation capability data to the power dispatching platform.

3. The method according to claim 2, wherein the regulatable capability data comprises a charging power adjustment threshold and/or a discharging power adjustment threshold; and said generating the overall regulation capability data based on the regulatable capability data during the control period reported by the various integrated storage-charging stations comprises at least one of the following:
generating an overall charging power adjustment threshold corresponding to the virtual power plant based on the charging power adjustment thresholds during the control period reported by the various integrated storage-charging stations; and
generating an overall discharging power adjustment threshold corresponding to the virtual power plant based on the discharging power adjustment thresholds during the control period reported by the various integrated storage-charging stations,
wherein the overall regulation capability data comprises the overall charging power adjustment threshold and/or the overall discharging power adjustment threshold.

4. The method according to claim 3, wherein the method further comprises:
receiving the winning regulation data sent by the power dispatching platform, the winning regulation data comprising a target charging power adjustment value and/or a target discharging power adjustment value, the target charging power adjustment value being less than or equal to the overall charging power adjustment threshold, and the target discharging power adjustment value being less than or equal to the overall discharging power adjustment threshold.

5. The method according to claim 4, wherein said generating the control instruction corresponding to the integrated storage-charging station based on the winning regulation data comprises:
determining the final regulation data corresponding to the various integrated storage-charging stations during the control period based on the winning regulation data and the regulatable capability data during the control period reported by the various integrated storage-charging stations; and
generating the control instructions corresponding to the various integrated storage-charging stations, based on the final regulation data corresponding to the various integrated storage-charging stations during the control period.

6. The method according to claim 5, wherein said determining the final regulation data corresponding to the various integrated storage-charging stations during the control period based on the winning regulation data and the regulatable capability data during the control period reported by the various integrated storage-charging stations comprises:
determining, based on a regulation type of the winning regulation data, a target integrated storage-charging station having a capability of the regulation type from the at least one integrated storage-charging station; and
splitting the winning regulation data based on power adjustment thresholds of the regulation type reported by the various target integrated storage-charging stations, to obtain the final regulation data corresponding to the various target integrated storage-charging stations during the control period.

7. The method according to any one of claims 1 to 6, wherein the regulation data comprises operating power of the integrated storage-charging station during the control period; and the method further comprises:
receiving, before generating the predicted regulation data of the integrated storage-charging station during the control period based on the load prediction model corresponding to the integrated storage-charging station, an invitation plan corresponding to the control period issued by the power dispatching platform;
sending, after receiving the reported regulation data sent by the integrated storage-charging station, a reporting request for the invitation plan to the power dispatching platform, the reporting request carrying operating power during the control period reported by the various integrated storage-charging stations; and
receiving the winning regulation data sent by the power dispatching platform, the winning regulation data comprising reporting results corresponding to the operating power reported by the various integrated storage-charging stations.

8. The method according to claim 7, wherein said generating the control instruction corresponding to the integrated storage-charging station based on the winning regulation data comprises:
determining, when the reporting result represents that the operating power reported by the integrated storage-charging station is successfully reported, the operating power reported by the integrated storage-charging station as the final regulation data corresponding to the integrated storage-charging station; and
generating the corresponding control instruction based on the final regulation data corresponding to the integrated storage-charging station.

9. The method according to any one of claims 1 to 8, wherein the method further comprises:
receiving real-time operating data sent by the integrated storage-charging station during the control period;
generating a deviation warning message based on the real-time operating data and the final regulation data corresponding to the integrated storage-charging station; and
sending the deviation warning message to the integrated storage-charging station.

10. A control apparatus for an integrated storage-charging station, applicable to a virtual power plant communicatively connected to at least one integrated storage-charging station, the control apparatus comprising:
a sending module configured to send predicted regulation data for a control period to the integrated storage-charging station, the predicted regulation data being generated based on a load prediction model corresponding to the integrated storage-charging station;
a receiving module configured to receive reported regulation data sent by the integrated storage-charging station, the reported regulation data being generated based on the predicted regulation data;
a generation module configured to generate a control instruction corresponding to the integrated storage-charging station based on winning regulation data, the control instruction carrying final regulation data corresponding to the integrated storage-charging station, the winning regulation data being obtained after reporting to a power dispatching platform based on the received reported regulation data, and the final regulation data being obtained after splitting the winning regulation data based on the regulation data reported by the integrated storage-charging station; and
a control module configured to issue a corresponding control instruction to the integrated storage-charging station, the control instruction being used for instructing the integrated storage-charging station to regulate its charging and discharging power based on the final regulation data.

11. The apparatus according to claim 10, wherein the regulation data comprises regulatable capability data of the integrated storage-charging station during the control period, the regulatable capability data representing a charging power adjustment capability and/or discharging power adjustment capability of the integrated storage-charging station during the control period; and the sending module is further configured to: generate overall regulation capability data based on the regulatable capability data during the control period reported by various integrated storage-charging stations, the overall regulation capability data being used for representing charging power adjustment capability and/or discharging power adjustment capability of the virtual power plant during the control period; and report the overall regulation capability data to the power dispatching platform.

12. The apparatus according to claim 11, wherein the regulatable capability data comprises a charging power adjustment threshold and/or a discharging power adjustment threshold; and the sending module is further configured to: generate an overall charging power adjustment threshold corresponding to the virtual power plant based on the charging power adjustment thresholds during the control period reported by the various integrated storage-charging stations; and/or generate an overall discharging power adjustment threshold corresponding to the virtual power plant based on the discharging power adjustment thresholds during the control period reported by the various integrated storage-charging stations, wherein the overall regulation capability data comprises the overall charging power adjustment threshold and/or the overall discharging power adjustment threshold.

13. The apparatus according to claim 12, wherein the receiving module is further configured to receive the winning regulation data sent by the power dispatching platform, the winning regulation data comprising a target charging power adjustment value and/or a target discharging power adjustment value, the target charging power adjustment value being less than or equal to the overall charging power adjustment threshold, and the target discharging power adjustment value being less than or equal to the overall discharging power adjustment threshold.

14. The apparatus according to claim 13, wherein the generation module is further configured to determine the final regulation data corresponding to the various integrated storage-charging stations during the control period based on the winning regulation data and the regulatable capability data during the control period reported by the various integrated storage-charging stations; and generate the control instructions corresponding to the various integrated storage-charging stations based on the final regulation data corresponding to the various integrated storage-charging stations during the control period.

15. The apparatus according to claim 14, wherein the generation module is further configured to: determine, based on a regulation type of the winning regulation data, a target integrated storage-charging station having a capability of the regulation type from the at least one integrated storage-charging station; and split the winning regulation data based on power adjustment thresholds of the regulation type reported by the various target integrated storage-charging stations, to obtain the final regulation data corresponding to the various target integrated storage-charging stations during the control period.

16. The apparatus according to any one of claims 10 to 15, wherein the regulation data comprises operating power of the integrated storage-charging station during the control period; the receiving module is further configured to: receive, before generating predicted regulation data of the integrated storage-charging station during the control period based on the load prediction model corresponding to the integrated storage-charging station, an invitation plan corresponding to the control period issued by the power dispatching platform; and the sending module is further configured to send, after receiving the reported regulation data sent by the integrated storage-charging station, a reporting request for the invitation plan to the power dispatching platform, the reporting request carrying operating power during the control period reported by the various integrated storage-charging stations; and receive the winning regulation data sent by the power dispatching platform, the winning regulation data comprising reporting results corresponding to the operating power reported by the various integrated storage-charging stations.

17. The apparatus according to claim 16, wherein the generation module is further configured to determine, when the reporting result represents that the operating power reported by the integrated storage-charging station is successfully reported, the operating power reported by the integrated storage-charging station as the final regulation data corresponding to the integrated storage-charging station; and generate the corresponding control instruction based on the final regulation data corresponding to the integrated storage-charging station.

18. A computer device, comprising:
a memory configured to store executable instructions; and
a processor configured to execute the executable instructions stored in the memory to implement the steps in the control method for the integrated storage-charging station according to any one of claims 1 to 9.

19. A computer-readable storage medium, storing executable instructions thereon, wherein the executable instructions, when executed by a processor, implement the steps in the control method for the integrated storage-charging station according to any one of claims 1 to 9.

20. A computer program product, comprising a computer program or instructions, wherein the computer program or instructions, when executed by a processor, implement the steps in the control method for the integrated storage-charging station according to any one of claims 1 to 9.
